Europäisches Patentamt

European Patent Office

Office européen des brevets

(11) Veröffentlichungsnummer : **0 065 763**
**B1**

(12) **EUROPÄISCHE PATENTSCHRIFT**

(45) Veröffentlichungstag der Patentschrift :
01.10.86

(21) Anmeldenummer : 82104419.5

(22) Anmeldetag : 19.05.82

(51) Int. Cl.⁴ : **H 04 L 27/14, H 04 L 1/20**

(54) Schaltung zum schnellen Erkennen von FSK-Signalen in einem Funkkanal.

(30) Priorität : 25.05.81 DE 3120761

(43) Veröffentlichungstag der Anmeldung :
01.12.82 Patentblatt 82/48

(45) Bekanntmachung des Hinweises auf die Patenterteilung : 01.10.86 Patentblatt 86/40

(84) Benannte Vertragsstaaten :
AT BE CH FR GB IT LI NL SE

(56) Entgegenhaltungen :
US-A- 3 614 627
ELECTRONIC ENGINEERING, Band 47, Nr. 70, August 1975, Seite 13, London, GB., "Phase lock loop ic demodulates fsk signals"

(73) Patentinhaber : Siemens Aktiengesellschaft Berlin und München
Wittelsbacherplatz 2
D-8000 München 2 (DE)

(72) Erfinder : Hjorring, Hans, Dipl.-Ing.
Lerdalsgt. 5G
N-2010 Strömmen (NO)

## Beschreibung

Die Erfindung bezieht sich auf eine Schaltung zum schnellen Erkennen von FSK-Signalen in einem Funkkanal bei Pre- und De-Emphasis mit einem FSK-Demodulator mit Phasenregelschleife. Eine derartige Schaltungsanordnung ist im wesentlichen bekannt durch die US-A-3 614 627 sowie « Electronic Engineering, Bd. 47, Nr. 70, August 75, Seite 13 ».

Zum Detektieren eines FSK-Signals in einem Funkkanal wird üblicherweise eine Phasenregelschleife (PLL-Phase Locked Loop) benutzt. Bei Verwendung eines Quadratur-Detektors als Lock-Detektor und mit Integration am Ausgang gibt der Kreis ein Ausgangssignal ab, wenn er zu einem Eingangssignal festgehalten ist. Kriterium für das Festhalten ist, daß das Eingangssignal oberhalb eines bestimmten Wertes liegt und sich außerdem innerhalb eines bestimmten Frequenzbandes um die Mittenfrequenz herum von der Phasenregelschleife befindet. Dieses Frequenzband ist dabei festgehalten durch die Schleifenverstärkung und den Schleifendämpfungsfaktor der Phasenregelschleife, die wiederum bestimmt ist durch den baud-Wert und die Frequenzabweichung des FSK-Daten-Signals (Frequenz Shift Keying).

Wenn an Antenneneingang eines Funkempfängers kein RF-Signal anliegt, wird am Hörausgang ein weißes Rauschen auftreten entsprechend dem im Empfänger erzeugten thermischen Rauschen, wenn keine Filterung stattfindet. In den meisten FM-Funksystemen wird der Hörausgang mit einem Tiefpaßfilter 1. Ordnung gefiltert mit einer Grenzfrequenz (cut off) bei einigen 100 Hz, die sogenannte De-Emphasis. Im Sender wird das Hörsignal gefiltert, die sog. Pre-Emphasis, um im gesamten System einen flachen Signalverlauf zu erhalten.

Die De-Emphasis im Empfänger ist meistens die Ursache für die Rosa-Rausch-Energie (d. i. + 6 dB/oktav) im demodulierten Datenkanal, wenn am Antenneneingang des Empfängers kein RF-Signal anliegt. Dadurch wird die phasengeregelte Schleife auf das Geräusch (Rauschen) eingefangen für eine ziemlich lange Periode. Dies wird, außer der Lock-Detektorausgang ist über eine ziemlich lange Periode integriert, ein falsches Festhalten an dem Geräusch (Rauschen) verursachen.

In bestimmten Fällen kann beim Funksystem eine lange Integrationszeit nicht akzeptabel sein, weil die verfügbare Zeit zur Umschaltung von einem Kanal auf den nächsten sehr kurz ist.

Der Erfindung liegt die Aufgabe zugrunde, eine Lösung anzugeben, mit der das vorstehend geschilderte Problem in einfacher Weise behoben werden kann.

Diese Aufgabe wird gemäß der Erfindung in der Weise gelöst, daß dem FSK-Demodulator mit Phasenregelschleife eine eingangsseitig parallelliegende Zweiwegschaltung mit einem nachfolgenden Umschalter vorgeschaltet ist, in deren einem Zweig (Suchweg) ein Hochpaßfilter als Kompensationsfilter eingefügt ist und über deren zweiten Zweig (Übertragungszweig) das ankommende FSK-Signal nach seiner Erkennung direkt auf den FSK-Demodulator geschaltet wird.

In vorteilhafter Weiterbildung des Anmeldungsgegenstandes ist vorgesehen, daß das Hochpaßfilter eine Grenzfrequenz (cut off-frequency) aufweist, die oberhalb der oberen Grenzfrequenz (upper cut off-frequency) des Hörkanals liegt.

Weitere Einzelheiten der Erfindung werden nachstehend anhand eines in der Zeichnung dargestellten Ausführungsbeispiels näher erläutert.

Es zeigen

Figur 1 Die Schaltung in einem Blockschaltbild,

Figur 2 in einem Diagramm die Anordnung des FSK-Daten-Kanals im Sprechkanal und

Figur 3 in einem Diagramm die Frequenzabhängigkeit der De-Emphasis im Empfänger und des Kompensationskreises.

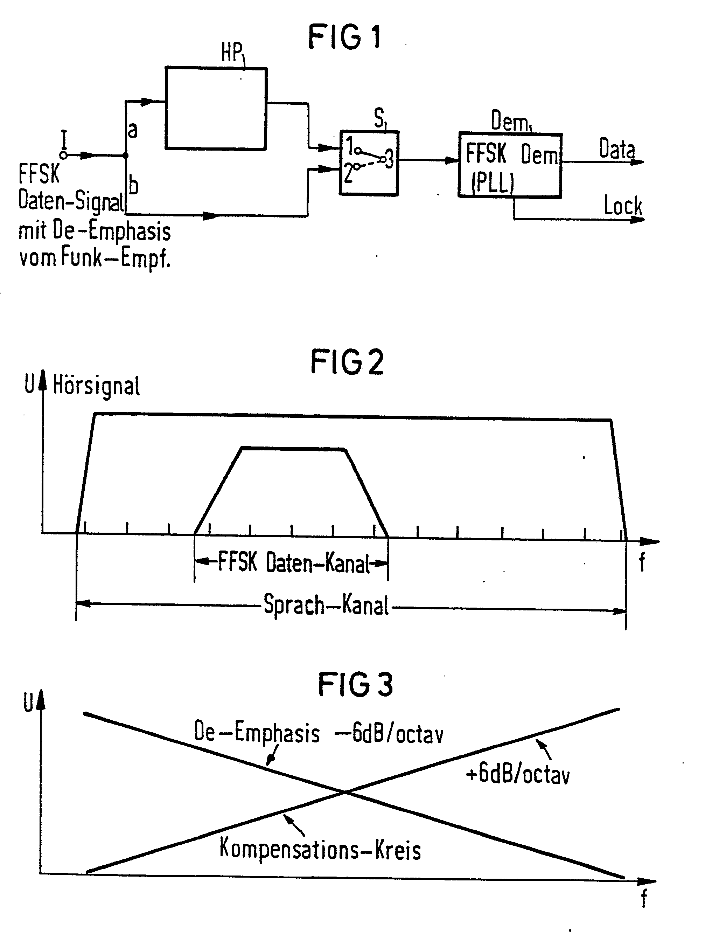

Im Blockschaltbild nach Fig. 1 ist mit I der Schaltungseingang bezeichnet, an dem das FSK-Daten-Signal mit DE-Emphasis vom Empfänger ankommt. Beim Ausführungsbeispiel handelt es sich dabei um ein FFSK-Datent-Signal (Fast Frequency Shift Keying), bei dem der Wechsel immer im Null-Durchgang erfolgt. Nach dem Schaltungeingang erfolgt eine Auftrennung des Übertragungsweges in eine Zweiwegschaltung, von denen der eine Zweig a, der sogenannte Suchzweig, ein Hochpaßfilter HP 1. Ordnung als Kompensationsfilter enthält, dessen Ausgang mit dem einen Kontakt 1 eines nachfolgenden Umschalters S verbunden ist, und der andere Zweig b als normaler Übertragungsweg direkt an den zweiten Anschluß 2 (strichlierte Darstellung) des Umschalters S angeschlossen ist. Der Schalter S ist mit seinem Kontakt 3 mit dem nachfolgenden FFSK-Demodulator verbunden, der mit einer Phasenregelschleife PLL versehen ist, die durch den Pfeil mit der Bezeichnung Lock dargestellt ist. Dem FFSK-Demodulator werden die demodulierten Daten (Pfeil mit Bezeichnung « Data ») entnommen.

Die Wirkungsweise der vorstehend beschriebenen Schaltung wird im folgenden erläutert : In der Schalterstellung 1 des Umschalters S (« Suche der Daten-Signalisierung ») wird der Hörausgang vom Empfänger in dem Hochpaßfilter HP 1. Ordnung gefiltert, der eine Grenzfrequenz (cut off-frequency) besitzt, die oberhalb der oberen Grenzfrequenz (upper cut off-frequency) des Hörkanals liegt. Dieses Filter hebt die De-Emphasis-Funktion auf, wirkt also als Kompensationskreis (vergleiche hierzu die Frequenzkurven in Fig. 3). Man erhält dadurch ein weißes Rauschspektrum. Dieses ist für die Phasenregelschleife sehr schwer festzuhalten, d. h. einzufangen. Dadurch kann also die Integrationszeit des Lock-Detektors viel kürzer gemacht werden als ohne

2

diesen Schaltkreis. Die erfindungsgemäße Maßnahme ermöglicht es also, die unerwünscht lange Integrationszeit zu reduzieren.

Bei Erkennen der FFSK-Daten-Signalisierung im Lock-Detektor wird das Hochpaßfilter HP mittels des Umschalters S abgeschaltet und die Phasenregelschleife PLL arbeitet bei der Demodulation in der üblichen Weise.

In der Fig. 2 ist in einem Diagramm die Spannung des Hörsignals (Audio level) über der Frequenz aufgetragen. Dabei ist erkennbar, wie der FFSK-Daten-Kanal geringerer Bandbreite innerhalb des Sprechkanals eingefügt ist.

**Patentansprüche**

1. Schaltung zum schnellen Erkennen von FSK-Signalen in einem Funkkanal bei Pre- und De-Emphasis mit einem FSK-Demodulator mit Phasenregelschleife, dadurch gekennzeichnet, daß dem FSK-Demodulator mit Phasenregelschleife (PLL) eine eingangsseitig parallelliegende Zweiwegschaltung mit einem nachfolgenden Umschalter (S) vorgeschaltet ist, in deren einem Zweig (a) (Suchweg) ein Hochpaßfilter (HP) als Kompensationsfilter eingefügt ist und über deren zweiten Zweig (b) (Übertragungsweg) das ankommende FSK-Signal nach seiner Erkennung direkt auf den FSK-Demodulator (Dem) geschaltet wird.

2. Schaltung nach Anspruch 1, dadurch gekennzeichnet, daß das Hochpaßfilter (HP) eine Grenzfrequenz (cut off-frequency) aufweist, die oberhalb der oberen Grenzfrequenz (upper cut off-frequency) des Hörkanals liegt.

**Claims**

1. An arrangement for the fast detection of frequency-shift keying signals in a radio channel during pre- and de-emphasis by means of an FSK-demodulator having a phase locked loop, characterised in that the FSK-demodulator having a phase-locked loop (PLL) is preceded by a two-way circuit which is connected in parallel at the input end and has a following change-over switch (S) and in whose one branch (a) (search path) is inserted a high-pass filter (HP) as a compensation filter and by means of whose second branch (b) (transmission path) the incoming FSK-signal is directly switched to the FSK-demodulator (Dem) after its detection.

2. An arrangement as claimed in claim 1, characterised in that the high-pass filter (HP) has a cut off-frequency which lies above the upper cut off-frequency.

**Revendications**

1. Montage pour la détection rapide de signaux à modulation par déplacement de fréquence dans une liaison radio par pré- et désaccentuation avec un démodulateur FSK à boucle de régulation de phase, caractérisé en ce que, du côté de l'entrée, un montage à deux voies parallèles suivies d'un commutateur S est relié au démodulateur FSK à boucle de démodulation de phase (PLL), montage dans une voie duquel (a) (chemin de recherche) un filtre passe-haut (HP) est inséré comme filtre de compensation et sur la deuxième voie duquel (b) (voie de transmission) le signal FSK arrivant après sa reconnaissance, est directement transmis au démodulateur FSK (Dem).

2. Montage selon la revendication 1, caractérisé en ce que le filtre passe-haut (HP) présente une fréquence de coupure, qui se situe au-dessus de la fréquence de coupure la plus élevée de la bande audible.

## FIG 1

HP

FFSK
Daten-Signal
mit De-Emphasis
vom Funk-Empf.

a

b

S₁

1
2
3

Dem₁

FFSK Dem
(PLL)

Data

Lock

## FIG 2

U Hörsignal

←FFSK Daten-Kanal→

Sprach-Kanal

f

## FIG 3

U

De-Emphasis  −6dB/octav

+6dB/octav

Kompensations-Kreis

f

1